Europäisches Patentamt

European Patent Office

Office européen des brevets

(19)

(11) Numéro de publication: **0 332 545**
**A1**

## (12) DEMANDE DE BREVET EUROPEEN

(21) Numéro de dépôt: **89420068.2**

(22) Date de dépôt: **22.02.89**

(51) Int. Cl.⁴: **G 01 L 25/00**

(30) Priorité: **26.02.88 FR 8802887**

(43) Date de publication de la demande:
**13.09.89 Bulletin 89/37**

(84) Etats contractants désignés:
**BE DE ES GB LU NL**

(71) Demandeur: **SAM OUTILLAGE Société Anonyme**
**60, boulevard Thiers B.P. 528**
**F-42000 Saint-Etienne Cedex (FR)**

(72) Inventeur: **Neithoffer, Jean Luc**
**31, rue de la République**
**F-42000 Saint Etienne (FR)**

**Heyraud, Georges**
**23, rue de la Riopaille**
**F-43240 Saint Just Malmont (FR)**

(74) Mandataire: **Perrier, Jean-Pierre et al**
**Cabinet GERMAIN & MAUREAU 12 rue de la République**
**F-42000 St-Etienne (FR)**

(54) Installation pour contrôler et tarer les clés dynamométriques.

(57) Cette installation comprend, d'une part, un banc horizontal (2) muni d'une lumière longitudinale (23) pour une butée (4), mobile et blocable en position et apte à porter la poignée de la clé, d'autre part, en plateau supérieur (3) qui, porteur, avec interposition de capteurs d'efforts, des moyens d'entrainement du carré de la clé, est solidaire d'un arbre vertical monté libre en rotation dans le banc (2), de plus, un levier (7) disposé dans le banc, dont l'une des extrémités est articulée autour de l'arbre vertical du plateau supérieur (3), et dont l'autre extrémité porte une noix taraudée (8) dans laquelle se visse une tige filetée transversale (10) de commande, et enfin un bloc d'analyse des signaux des capteurs et de visualisation du couple mesuré.

FIG.2

EP 0 332 545 A1

Description

## Installation pour contrôler et tarer les clés dynamométriques

Les clés dynamométriques, de type mécanique, électro mécanique ou électronique, comportent des moyens visuels ou sonores qui entrent en action lorsque le couple de serrage est atteint et/ou va être atteint.

Ces moyens sont commandés par des moyens mécaniques ou électroniques réagissant à une valeur de couple de serrage ,déterminée, mais réglable. Cette faculté de réglage, nécessaire pour permettre à la clé de contrôler divers couple de serrage, à pour corollaire des imprécisions dans la valeur exacte du couple de déclenchement, de sorte que, pour des utilisations précises, il est nécessaire de vérifier la précision de la clé et éventuellement d'ajuster son tarage.

Cette opération est effectuée avec une installation comportant des moyens d'entraînement, aptes à coopérer avec le carré d'entraînement de la clé, et associés à au moins un capteur d'effort réagissant sur des moyens électroniques et sur des moyens d'affichage du couple mesuré, des moyens pour supporter la clé, des moyens pour créer une force de retenue dans la zone de préhension de la clé, et des moyens générant, sur les moyens d'entraînement, un couple de valeur réglable pour être adapté au couple de serrage contrôlé, allant de 0 newton-mètre jusqu'à des valeurs de l'ordre de 1 000 newton-mètre.

Les moyens d'entraînement sont associés à des moyens démultiplicateurs permettant, pour un effort humain de valeur normale, d'obtenir les efforts recherchés.

Dans les installations actuelles, ces moyens sont constitués par un réducteur à train épicycloïdal et à, vis tangentielle permettant d'obtenir une réduction de l'ordre de 1/1 000. Ces moyens sont coûtex à réaliser et interviennent de manière sensible sur le prix final de l'installation.

La présente invention a pour but de fournir une installation peu onéreuse à réaliser et de mise en oeuvre aisée.

Cette installation comprend, l'une part, un banc horizontal muni d'une lumière longitudinale pour une butée support de poignée, mobile et blocable en position, d'autre part, un plateau supérieur qui, porteur, avec interposition de capteurs d'efforts, des moyens d'entraînement du carré de la clé, est solidaire d'un arbre vertical monté libre en rotation dans le banc, de plus, un levier disposé dans le banc, dont l'une des extrémités est articulée autour de l'arbre vertical du plateau supérieur et est liée de manière amovible à ce plateau, et dont l'autre extrémité porte une noix taraudée,articulée autour d'un axe vertical et dans laquelle se visse une tige filetée transversale de commande, tige montée libre en rotation dans le banc et solidaire d'un organe de manoeuvre, extérieur au banc, et enfin, un bloc d'analyse des signaux des capteurs et de visualisation du couple mesuré.

Dans cette installation les moyens créant le couple sur le carré de la clé sont simples et peu onéreux. De plus l'ensemble des moyens de mesure et de contrôle sont portés par un banc monolithique facilitant la mise en place de la clé et réduisant le temps nécessaire pour effectuer la mesure.

Avantageusement, le plateau est lié au levier par des moyens permettant de prérégler la position du manche de la clé par rapport à son support.

Dans une forme d'exécution de l'invention, ces moyens sont constitués par une première série d'alésage réalisés dans une partie du plateau, répartis suivant un arc de cercle et avec un pas angulaire constant de 15°, par une seconde série d'alésages de même diamètre que les précédents, réalisés dans le talon du levier, répartis sur un arc de cercle de même rayon que celui des précédents alésages mais avec un pas angulaire de 20° et, par une broche de liaison entre deux alésages superposés, broche traversant une lumière en arc de cercle du panneau supérieur du banc.

Cet agencement permet de régler la position du manche de la clé par rapport à la butée support, avec une précision de l'ordre de plus ou moins 5°, de réduire la course nécessaire pour amener le manche en contact sur la butée et en conséquence de réduire le temps de manipulation avant mesure.

D'autres caractéristiques et avantages ressortiront de la description qui suit en référence au dessin schématique annexé représentant, à titre d'exemple non limitatif, une forme d'exécution de cette installation.

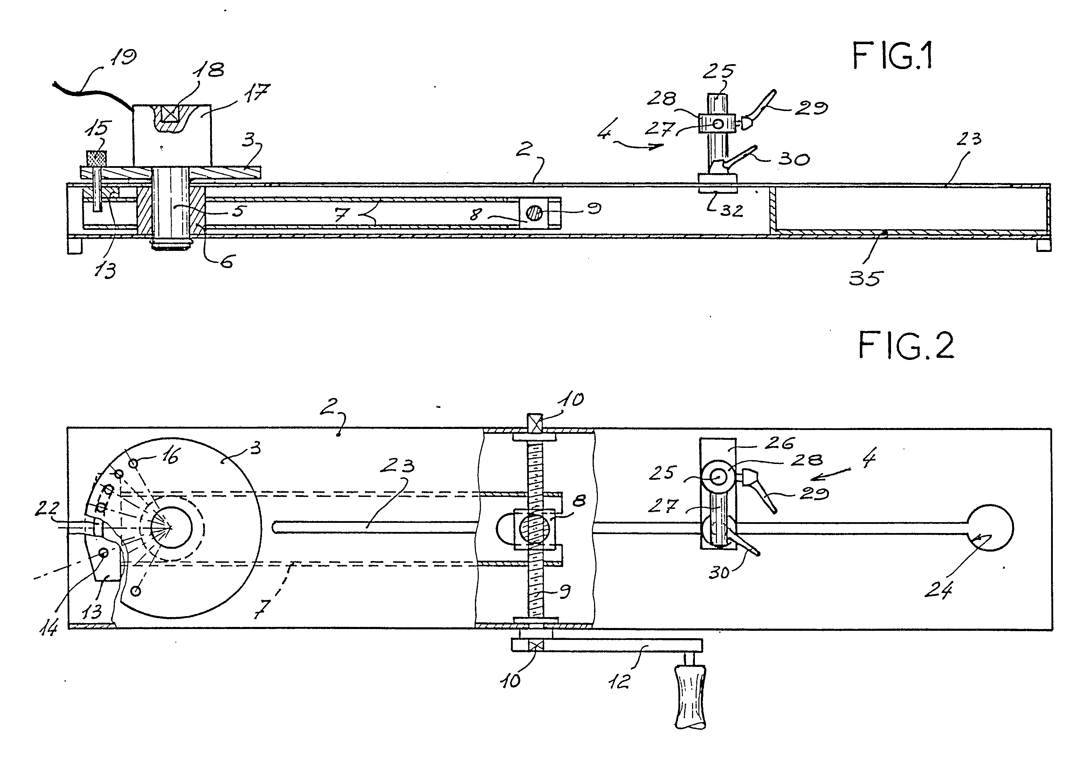

Figure 1 et 2 sont des vues, respectivement, de côté en coupe longitudinale et en plan par dessus avec coupe partielle de l'installation ;

Figure 3 est une vue partielle en perspective éclatée montrant une forme d'exécution des moyens permettant de prérégler la position du manche de la clé ;

Figures 4 et 5 sont des vues en élévations respectivement de côté et en plan par dessus lorsqu'une clé est montée sur l'installation.

Cette installation est composée d'un banc horizontal désigné de façon générale par 2, d'un plateau rotatif 3 et d'un support 4.

Le plateau 3 est solidaire d'un arbre vertical 5 monté libre en rotation dans le banc 2 qu'il traverse de part en part. Cet arbre constitue pivot pour un palier 6 d'un levier 7 disposé longitudinalement à l'intérieur du banc. A l'extrémité de sa plus grande branche, ce levier porte une noix articulée 8 dans laquelle se visse une tige filetée 9 disposée transversalement au banc et montée libre en rotation dans des paliers, ménagés dans des parois latérales de ce dernier. Les extrémités de la tige, dépassant du banc, sont conformées en carré d'entraînement 10 de manière à pouvoir coopérer avec une manivelle ou un volant d'actionnement amovible 12.

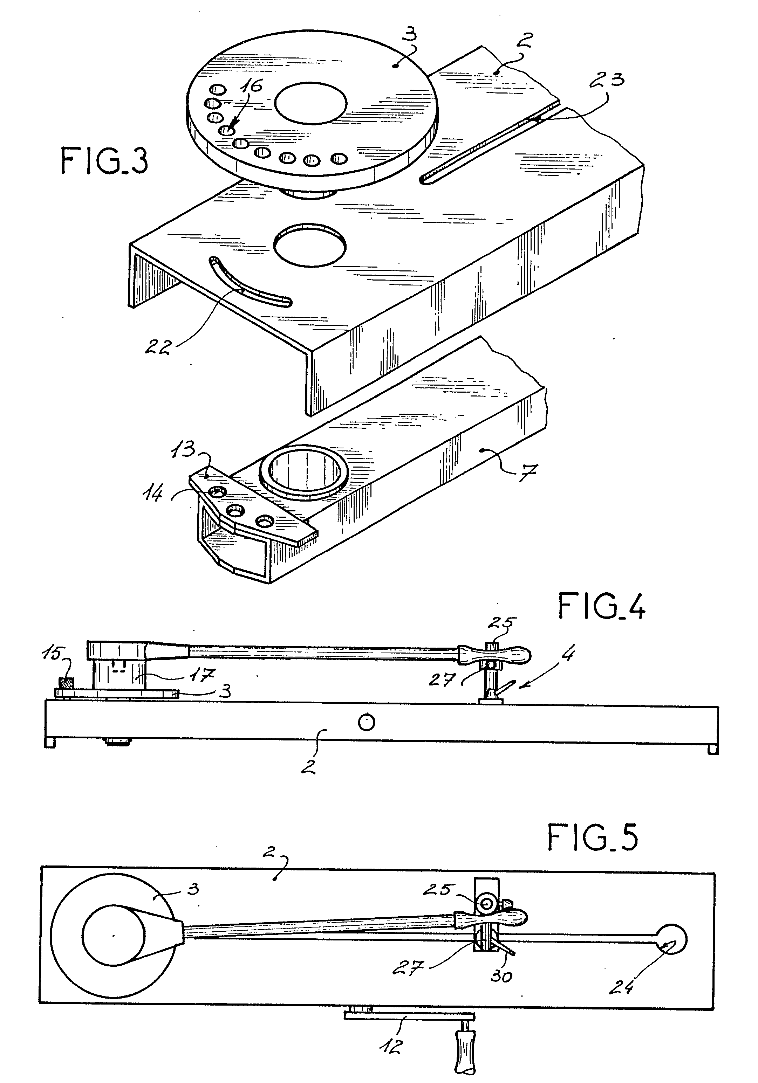

A son autre extrémité, le levier 7 est solidaire d'une platine 13 traversée par des alésages verticaux 14 visibles figures 3 et 5. ces alésages 16 sont espacés par un pas angulaire de 15°.

De façon connue, le plateau 3 est destiné à recevoir un corps 17 comportant un carré d'entraînement femelle 18 et des capteurs d'effort, de type jauge de contrainte, reliés un cordon 19 à un boîtier non représenté comportant des moyens d'analyse des signaux émis par ces capteurs et des moyens d'affichage de la valeur du couple.

Le banc 2 comporte, dans sa paroi supérieure, d'une part, une lumière en arc de cercle 22 pour le passage d'un doigt 15 et, d'autre part, une lumière longitudinale 23 communiquant à son extrémité, avec un alésage 24.

Cette lumière permet le coulissement du support 4 qui est composé d'un montant vertical 25 saillant d'une semelle 26 et portant un doigt latéral horizontal 27 solidaire d'un collier 28. Le collier 28 est muni de moyens 29 permettant de bloquer à la hauteur voulue sur le montant 25. Enfin, la semelle 26 est munie de moyens de blocage 30 coopérant avec un sabot 32, de forme circulaire, apte à traverser l'alésage 24 et à prendre appui sous les bords de la lumière 23 à l'intérieur du banc.

Pour contrôler une clé dynamométrique avec cette installation, il suffit d'engager le carré d'entraînement de la clé dans le carré femelle 18, de poser le manche de la clé sur le doigt horizontal 27, de régler la hauteur de ce doigt de manière que le manche soit sensiblement parallèle au banc et de régler la position longitudinale du support 4, de manière qu'il soit au niveau de la zone de préhension normale de la clé.

Dès que ces réglages sont effectués, l'entraînement en rotation de la tige filetée 9, par la manivelle 12, communique au levier 7 un mouvement de pivotement qui, par l'intermédiaire du doigt 15 et du plateau 3, se transmet au carré d'entrainement femelle 18 et, en conséquence, au carré de la clé dynamométrique dont le manche vient en appui, contre le support 25. De façon connue les capteurs d'effort disposés dans le corps 17 mesurent le couple exercé sur la clé, couple qui est affiché sur un écran du boîtier. La comparaison des informations données par le boîtier avec les afficheurs de la clé, si celle-ci est de type électronique, ou avec les moyens mécaniques d'indication du couple, permet, d'assurer un contrôle instantané et si besoin est, de tarer différemment les moyens de réglage de la clé.

Les moyens démultiplicateurs, constitués par le levier 7 la noix 8 et la tige filetée 9, sont peu onéreux, très simples et permettent d'obtenir les valeurs d'effort recherchées à partir d'un effort humain normal.

Il faut noter que, pour faciliter le positionnement initial de la clé, et réduire la durée d'actionnement de la manivelle 12, il est possible de modifier la position angulaire du plateau 3 par rapport à la platine 13 du levier 7.

A cet effet, le plateau 3 est pivoté jusqu'à ce que la zone de préhension de la clé soit dans une position plus proche du montant 25 du support 4, position correspondant à l'alignement de l'un des alésages 16 du plateau avec un autre alésage 14 de la platine 13 du levier 7. A ce moment, le doigt 25 est engagé dans les alésages en coincidence pour lier le plateau 3 au levier 7.

Le banc comporte à son extrémité libre un tiroir 35 pouvant recevoir, pour le stockage et le transport le support 4, la manivelle 12, le block 17 et le boîtier d'analyse et de lecture.

## Revendications

1. Installation pour contrôler et tarer les clés dynamométriques caractérisée en ce qu'elle comprend, d'une part, un banc horizontal (2) muni d'une lumière longitudinale (23) pour une butée (4) support de poignée, mobile et blocable en position, d'autre part, un plateau supérieur (3) qui, porteur, avec interposition de capteurs d'efforts, des moyens (18) d'entraînement du carré de la clé, est solidaire d'un arbre vertical (5) monté libre en rotation dans le banc (2), de plus, un levier (7) disposé dans le banc, dont l'une des extrémités est articulée autour de l'arbre vertical (5) du plateau supérieur (3) et est liée de manière amovible à ce plateau, et dont l'autre extrémité porte une noix taraudée (8), articulée autour d'un axe vertical et dans laquelle se visse une tige filetée transversale (10) de commande, tige montée libre en rotation dans le banc, et solidaire d'un organe de manoeuvre (12) extérieur au banc, et enfin, un bloc d'analyse des signaux des capteurs et de visualisation du couple mesuré.

2. Installation selon la revendication 1 caractérisée en ce que le plateau (3) est lié au levier (7) par des moyens permettant de prérégler la position du manche de la clé par rapport à son support.

3. Installation selon l'ensemble des revendications 1 et 2 caractérisée en ce que ces moyens sont constitués par une première série d'alésage (16) réalisés dans une partie du plateau (3), répartis suivant un arc de cercle et avec un pas angulaire constant de 15°, par une seconde série d'alésages (14) de même diamètre que les précédents, réalisés dans le talon du levier (7), répartis sur un arc de cercle de même rayon que celui des précédents alésages mais avec un pas angulaire de 20° et, par une broche (15) de liaison entre deux alésages superposés, broche traversant une lumière en arc de cercle (22) du panneau supérieur du banc (2).

4. Installation selon l'une quelconque des revendications 1 à 3 caractérisée en ce que le banc (2) comporte un tiroir (4) de rangement (35) pour la butée de support (4), la manivelle d'actionnement (12) et le bloc d'analyse et de mesure avec son cordon (19) de liaison au corps (17).

FIG.1

FIG.2

EP 0 332 545 A1

FIG.3

3

2

23

16

22

13

14

7

FIG.4

15

17

3

25

27

4

2

2

FIG.5

2

3

25

27

30

24

12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 470 312  (D. THOMPSON)<br>--- | 1 | G 01 L  25/00 |
| A | DE-A-2 717 429  (P.H. WAGNER MASCHINEN FABRIKATION)<br>--- | | |
| A | DE-A-2 817 040  (FA. R.A. HERDER)<br>----- | | |

|  | DOMAINES TECHNIQUES RECHERCHES (Int. Cl.4) |
|---|---|
|  | G 01 L  25/00 |

Le présent rapport a été établi pour toutes les revendications

| Lieu de la recherche | Date d'achèvement de la recherche | Examinateur |
|---|---|---|
| BERLIN | 29-05-1989 | KOEHN G |